# EUROPEAN PATENT SPECIFICATION

(11) **EP 4 502 864 B1**
(45) Date of publication and mention of the grant of the patent: **08.04.2026**
(21) Application number: 24192535.3
(22) Date of filing: 02.08.2024
(51) Int. Cl.: G06K 7/10

(54) **INDICATING A PROCESS POSITION FOR A RADIO-FREQUENCY TAG**
ANZEIGE EINER PROZESSPOSITION FÜR EIN HOCHFREQUENZETIKETT
INDICATION D'UNE POSITION DE PROCESSUS POUR UNE ÉTIQUETTE RADIOFRÉQUENCE

(30) Priority: 02.08.2023 FI 20235860; 06.03.2024 FI 20245275
(43) Date of publication of application: 05.02.2025
(73) Proprietor: Voyantic OY, 00380 Helsinki (FI)
(72) Inventor: PUUKANGAS, Pertti, 00380 Helsinki (FI); NYKÄNEN, Jussi, 00380 Helsinki (FI); TUOMINEN, Jesse, 00380 Helsinki (FI)
(74) Representative: Laine IP Oy

(56) References cited:
- EP-A2- 2 420 958
- US-A1- 2008 100 329

## Description

### FIELD

This disclosure relates to radio-frequency identification, RFID, technology. The disclosure relates to a coupling element, an apparatus, a computer program and a method for indicating, and optionally tuning, a processing position for one or more RFID tags on a production line.

### BACKGROUND

RFID tags are processed in their production process, for example tested in order to detect and mark deficient ones. A deficiency may be detected by measuring the performance of RFID tags. For example, measured frequency response indicates sensitivity and RF-bandwidth of an RFID tag. At the end of the production process RFID tags are typically encoded with correct data content, settings and passwords.

US2008/100329A1 discloses RFID tag test module configured to receive a web of RFID tags. The RFID tag test module provides an indication that an RFID tag passed or failed the test by illuminating an indicator light, by displaying test result information on a graphic display, by storing test result information in storage and/or by taking other action.

EP2420958A2 discloses an RFID system including a tag with an integrated circuit and an RFID reader. The integrated circuit maintains during brief absences of power a persistent flag. The persistence time of such flag is susceptible to light. The RFID reader includes a radio frequency source, an antenna and a light source, which is configured to produce a light beam that alters or manipulates a function of an RFID tag.

### SUMMARY

Processing RFID tags proceeding along a lane of production may have challenges, because the speed of production should be maintained, while testing the RFID tags.

In this disclosure a coupling element, an apparatus, a computer program and a method for indicating a process position for RFID tags are provided. Indication enables detecting a process position, for example a test position and/or an encode position, for RFID tags.

The invention is defined by the features of the independent claims. Some specific embodiments are defined in the dependent claims.

According to a first aspect, a coupling element for indicating a process position of at least one radio frequency identification, RFID, tag comprising: a housing comprising an inside; a shield plate forming a top surface of the housing and comprising at least one sensing aperture; the coupling element configured to generate an electromagnetic field arranged to couple with the at least one RFID tag; and at least one light arranged inside of the housing and arranged to illuminate the inside of the housing. The coupling element is configured to process the at least one RFID tag within the sensing aperture such that the at least one RFID tag is coupled to the coupling element via the electromagnetic field, and the at least one light is controlled based on timing of a process of the at least one RFID tag.

According to a second aspect, an apparatus for indicating a process position for radio frequency identification, RFID, tags, comprises the coupling element of the first aspect.

According to a third aspect, a method for indicating a process position for at least one radio frequency identification, RFID, tag, comprises: providing at least one RFID tag within a sensing aperture, which is situated on a top surface of a coupling element, such that the at least one RFID tag is coupled to the coupling element via an electromagnetic field; and controlling at least one light, which is arranged inside of a housing of the coupling element, based on timing of a process of the at least one RFID tag.

According to a fourth aspect, a computer program is configured to cause an apparatus according to the second aspect to perform the method in accordance with the third aspect. A computer program may be non-tangible computer program. A computer program may be comprised in non-tangible memory configured to store executable instructions.

The at least one light may comprise at least one of the following: at least one light emitting diode, LED, an array of LEDs, a flashlight or a strobe light. The at least one light may be arranged to illuminate the at least one RFID tag within the sensing aperture. The at least one light may be light emitted from the at least one light being configured to reflect from the interior of the housing, and the reflected light is configured to illuminate the at least one RFID tag within the sensing aperture. The at least one light may be controlled based on at least one of: a start signal of the process of the at least one RFID tag; an end signal of the process of the at least one RFID tag; a start position of the at least one RFID tag, and a predetermined signal pattern or instruction. The at least one light may comprise colored lights configured to indicate status of RFID tags responsive to different measurement, process, encode and/or test results.

The coupling element may be configured to process RFID tags successively fed on the sensing aperture, wherein the positions of the illuminated RFID tags in relation to the sensing aperture may be indicated and/or detectable. The coupling element may be configured to process successive RFID tags and to illuminate the successive RFID tags in order to indicate whether positions of the successive RFID tags are stable or non-stable in relation to the sensing aperture.

The coupling element may be configured to, adjust a speed of movement of an at least one RFID tag to be processed in relation to the sensing aperture, based on an indicated position of the at least one processed RFID tag in relation to the sensing aperture. The coupling element may be configured to adjust a start time of the process, or a start position of at least one RFID tag to be processed, based on an indicated position of the at least one processed RFID tag in relation to the sensing aperture.

Responsive to the coupling element receiving a start signal of the process, the at least one light may be caused to turn on for a predefined time period. Responsive to the coupling element receiving an end signal of the process, the at least one light may be caused to turn on for a predefined time period. Responsive to the coupling element receiving a predetermined signal pattern or instruction, the at least one light may be caused to turn on for a predefined time period.

The at least one light may be controlled by adjusting a duration of illumination in relation to a speed of movement of the at least one RFID tag.

The coupling element may be configured to be controlled by a controller. The controller may be integrated to the coupling element or connected to it. The controller may be configured to indicate and/or detect at least one of the following: a position of the at least one or successive illuminated RFID tags in relation to the sensing aperture; and stability or non-stability of a position of the successive illuminated RFID tags in relation to the sensing aperture. The controller may be configured to detect position based on image data of illuminated RFID tags on the sensing aperture, which may be captured by a camera. The controller may be configured to send a control signal configured to adjust speed of the at least one RFID tag, or successive RFID tags, based on the indicated and/or detected position or non-stable position of the illuminated RFID tags in relation to the sensing aperture.

### BRIEF DESCRIPTION OF THE DRAWINGS

FIGURES 1A and 1B illustrate schematic views of an example coupling device in accordance with at least some embodiments of the present invention;
FIGURES 2A - 2D and 3 illustrate schematic views of example coupling devices and example rolls of RFID tags in accordance with at least some embodiments of the present invention;
FIGURE 4 illustrates an example apparatus capable of supporting at least some embodiments of the present invention;
FIGURES 5 illustrates a schematic view of example system in accordance with at least some embodiments of the present invention; and
FIGURES 6 illustrates an example method in accordance with at least some embodiments of the present invention.

### EMBODIMENTS

A suitable electromagnetic field is used by the coupling element to couple to the RFID tags. Said coupling may be utilized to process RFID tags, which may include to perform at least one of the tasks of: power-up, activating, identifying, testing, or encoding RFID tags; and/or reading RFID tag data. An electromagnetic field suitable for coupling with an RFID tag may refer to an electromagnetic field compatible with the RFID tag or coupling with such a RFID tag, or matching with the RFID tag, or enabling means of communication with the RFID tag. For suitability and/or conversion one or more of the following parameters may be adapted: field polarization, field concentration, loading based RFID tag detuning, electromagnetic field type, differential field separation, etc.

The RFID tags may be so-called "wet inlays" (with adhesive backing) or "dry inlays" (no adhesive backing). Polyethylene terephthalate, PET, film may be used as a substrate for the RFID tags.

It is noted that the moving of the RFID tags may be done along a suitable conveyor or plane arranged suitably. RFID tags generally are provided in rolls of RFID tags. A roll may have the RFID tags placed in a single continuous line, or a roll may have multiple RFID tags in parallel in their own lanes. The methods and apparatuses herein are suitable for processing multiple lanes, ideally so that each lane has an assigned coupling element arranged within that lane. Alternatively or additionally, sensing apertures and electrodes may be configured to handle multiple lanes with a single multilane coupling element.

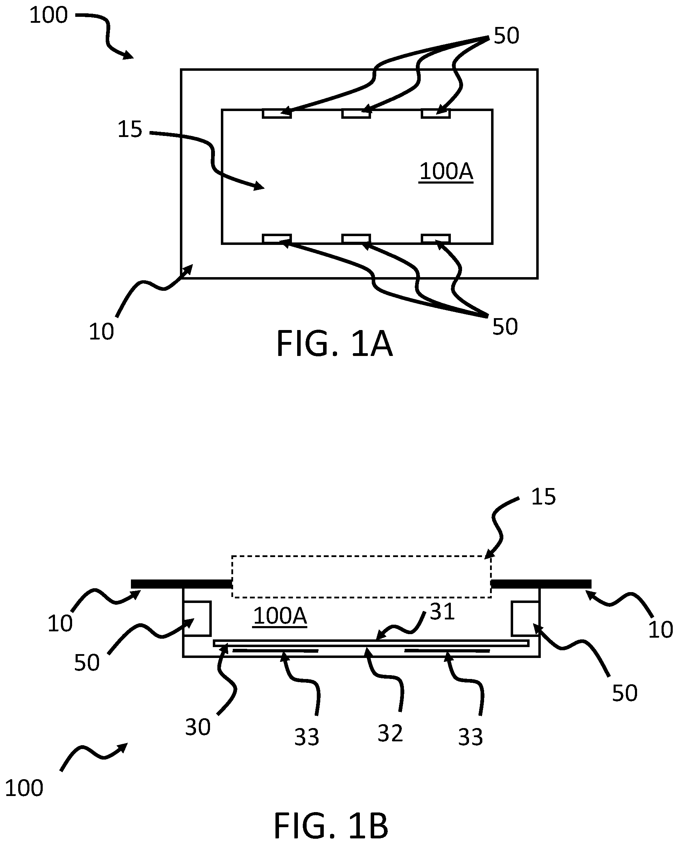

Figure 1 illustrates, by way of an example, a top view of a coupling element suitable for coupling to RFID tags. Coupling element 100 comprises a housing, which has an interior, an inside surrounded by the housing. The top side of the coupling element 100 comprises a shield plate 10. Shield plate 10 may form a top side of the housing, or be attached to the housing, for example using magnets. The housing and/or shield plate 10 may be electrically conductive. Shield plate 10 has at least one opening, wherein the at least one opening is a through-opening. Said opening is termed the sensing aperture 15. Multiple sensing apertures 15 may be arranged in shield plate 10. Dimensions of the sensing aperture 15 may be selected based on the dimensions of the RFID tags to be processed, so that the sensing aperture 15 is only slightly larger (for example, 4-8 mm on each side) than the RFID tags to be processed. Speed of the production lane and distance between two neighboring RFID tags has effect on the size of the sensing aperture 15. The sensing aperture 15 may be dimensioned such that during the power-up and communication phase, at least a 2 mm gap exists between the antenna of the RFID tag and the sensing aperture 15. The sensing aperture 15 may be used for any RFID tag related operations.

Coupling element 100 comprises electrode plate 30, which is arranged within the housing of the coupling element 100. Electrode plate 30 has a top surface 31 and a lower surface 32. Further, electrodes 33 are arranged on electrode plate 30, for example on the lower surface 32. Said electrodes are connected to a controller of the coupling element, said controller being located within the housing. Electrode plate 30 may comprise a printed circuit board, PCB, for example.

The top surface 31 of the electrode plate 30 is arranged to face the sensing aperture 15. The top surface 31 of the electrode plate may be colored white and/or matt. Such a configuration helps the illumination of the RFID tag within the sensing aperture.

Coupling element 100 comprises at least one light 50. Light 50 is arranged within the housing, preferably above the electrode plate 30 and/or preferably below the shield plate 10. Light 50 may be oriented so that the principal direction of the light is oriented parallel to the top surface 31, and/or the electrode plate 30, thereby obtaining a diffuse light within the sensing aperture 15. This enables to avoid a direct line of sight from outside of the housing, via the sensing aperture 15, to the light source. Light 50 may be configured to illuminate the interior 100A of the housing of the coupling element (i.e. the area within the sensing aperture). The interior 100A and/or interior surfaces of the coupling element 100 may be light colored, white and/or matt. The interior 100A and/or interior surfaces of the coupling element 100 may produce a secondary, uniform, indirect light source towards the sensing aperture 15. Secondary, indirect light may be emitted (by light 50) towards the sensing aperture 15, while no direct light may be emitted (from the light 50) towards the sensing aperture 15.

Light 50 may comprise a plurality of LED lights, for example 3 - 12 LED lights, for example 6 LED lights. Suitable LED lights include high-power and/or high-output LED's, for example. Said lights may be arranged in the interior of the housing, beneath the perimeter of the sensing aperture, for example on at least two sides of the rectangle formed by the interior of the housing. When light 50 is comprised of several light sources such as LED lights, different types of lights may be used. For example, the lights may be of different colors, whereby status of RFID tags may be indicated via using specific colored lights responsive to different measurement and/or process results. For example, the light 50 may comprise 4 white lights, 2 red lights (for indicating a process result for a bad condition), 2 green lights (for indicating a process result for a good condition).

In an embodiment, light 50 comprises at least one IR, infrared light source. IR light is visible by typical cameras and machine vision. It enables visualization without special camera devices. In addition, IR light does not cause irritation to outside, for example to an operator, by brightness or flashing.

Coupling element 100 may further comprise connectors for any of data, power, RF signal. The element 100 may comprise, for example, a coaxial connection and an Ethernet connection.

An electrode plate 30 of FIGURE 1 may be replaced by means for generating an electromagnetic field arranged to couple to at least one RFID tag. Generation of an electromagnetic field for coupling may comprise electrodes, coils and/or transmission lines. An electrode plate 30 of FIGURE 1 may be implemented in other forms or shapes, like a wire, a string or an arch. A coupling element of Fig. 1 has been illustrated as an example, while other kind of coupling elements may be used. Rectangular shape of the coupling element may be replaced by some other shape.

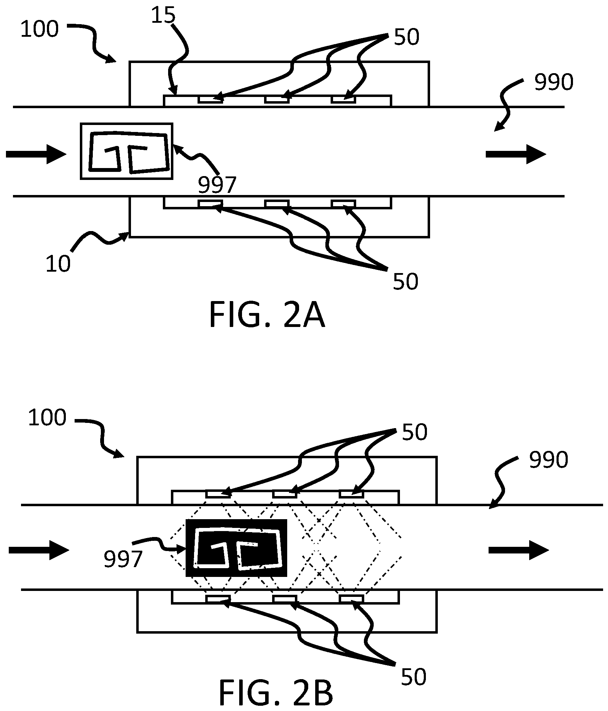

FIGURE 2A illustrates a coupling element and a roll of RFID tags. A coupling element 100 is viewed from above. Above coupling element is tag roll 990, comprising an RFID tag 997. Tag roll 990 may comprise several RFID tags, for example hundreds of RFID tags. The arrows on tag roll 990 within Fig. 2A are for visual purposes only and indicate that the RFID tags move from left to right over coupling element 100.

The RFID tag 997, which is to be processed, is usually a part of a roll 990 of RFID tags, which proceeds over the coupling element 100 and the sensing aperture 15 so that it slides on the plate 10 portion of the coupling element 100, towards the sensing aperture 15, and hangs over the sensing aperture 15 portion of the coupling element 100. Finally, after the RFID tag has proceeded past the sensing aperture 15, the RFID tag slides over the plate 10 portion again, as can be seen for example in Figure 2A.

RFID tag comprises a chip, an antenna and a substrate. RFID tag substrate is a carrier that holds the RFID chip and antenna together. The RFID tag antenna may be deposited or printed on the substrate, and the RFID chip attached to the antenna. An inlay comprises a chip and an antenna attached to a substrate. The inlay and the substrate may be translucent.

FIGURE 2B illustrates a coupling device and roll of RFID tags. The lights 50 illuminate the RFID tag roll 990. Lights 50 are beneficially configured to turn on and off, and to provide illumination through a sensing aperture 15. The RFID tag entering the sensing aperture 15 is illuminated in FIGURE 2B. Lights 50 may be configured to turn on and/or off via the controller, said controller being connected to the lights 50 and the coupling element 100. As can be seen from the FIGURE 2B, tag roll 990 is illuminated because of the lights 50 being turned on. Light emitted from lights 50 at least partially pass through an inlay of the RFID tags creating a visible outline of the antenna of the RFID tag 997. As a result, a visual indication of the RFID tag 997 is provided, where an outline of for example the antenna of the RFID tag 997 is visible. If the duration of the illumination period is sufficiently short in relation to the propagation speed of the tag material, the illuminated RFID tags appear stationary and therefore their position at this time of illumination is easy to perceive. The conditions achieved via the illumination allow for good image quality, even if lower quality camera systems are used even without any triggering capability.

The RFID tag proceeds over the sensing aperture. During this time, the RFID tag may be processed by coupling with it using the coupling element. Processing tasks during the coupling period may comprise, for example, powering-up the RFID tag, activating the RFID tag, identifying the RFID tag, reading RFID tag data, testing the RFID tag and/or encoding the RFID tag. Processing may comprise testing and/or encoding the RFID tag. The RFID tag may move for example 1 centimeter during processing. As an example, the RFID tag roll speed may be 1 meter per second, wherein 1 ms is equivalent of 1 mm of movement of the RFID tag roll.

If the coupling between the RFID tag and the coupling device has been established, and the scheduled tasks executed successfully, the overall process result is positive. The lights (50) may be controlled accordingly, to indicate the positive process result of the RFID tag. In case the outcome is negative, the lights (50) may be controlled in order to indicate the negative process result of the RFID tag. For example, green and red lights, or different light patterns may be used to make an instant visual indication of the process result.

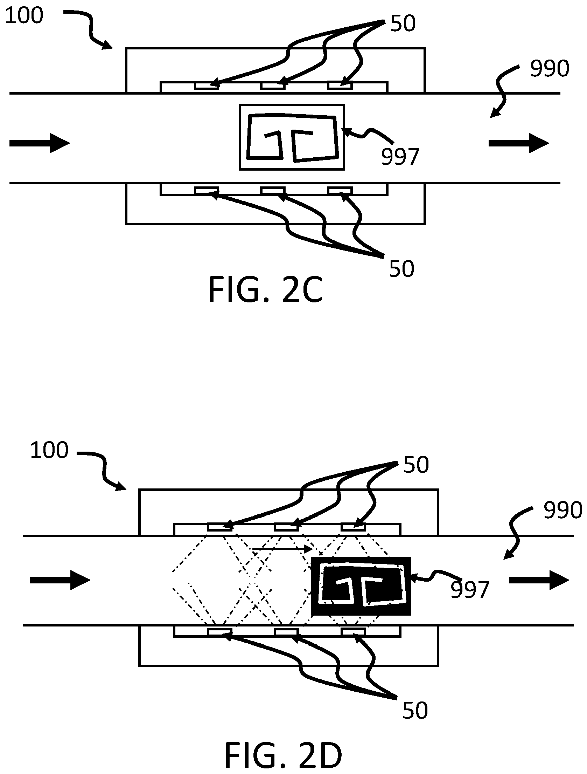

FIGURE 2C illustrates a coupling element and a roll of RFID tags. In FIGURE 2C the lights 50 are turned off after a pre-defined time period. Turning the lights off is beneficial for at least the reason that if the lights are turned off, then the turning on signifies an event, for example to machine vision systems or human operators.

FIGURE 2D illustrates that the lights 50 are turned on at the phase where the RFID tag 997 is moving away from the sensing aperture 15. After the RFID tag has passed the sensing aperture 15, the RFID tag cannot be communicated by the coupling element 100.

As illustrated in FIGURES 2A-2D, an RFID tags 997 is arranged to pass along a surface of the coupling element 100, wherein the surface includes a sensing aperture 15. The RFID tag 997 within the sensing aperture 15 is to be processed by the coupling device 100. Processing the RFID tag 997 using the coupling element 100 is enabled when the RFID tag 997 is passing the sensing aperture 15. For processing antenna of the RFID tag 997 is within the sensing aperture 15. Lights 50, which are arranged to alternate between on-off, may comprise strobe lights, or be arranged to cause a strobe effect. Strobe lights or stroboscopic lights produce regular flashes of light. The strobe lights may be capable of flashing hundreds of times per second. A controller may be configured to adjust timing and duration of flashing of lights. The strobe effect, or a stroboscopic effect, is created by successively illuminating successive RFID tags at the same position such that the continuous movement of the RFID tags on a line is indicated and detectable as successive still images. Too short flash duration is indicated and detectable to lack luminous intensity and too long flash duration is indicated and detectable as inaccurate, blurred and/or stretched view. Visual effects are dependent on adjusting timing and/or duration of the strobe light. In a processing line, strobe effect may be matched with the speed of the RFID tags, for example by shortening the illumination time for faster movement or keeping the lights on for a fixed amount of movement for an RFID tag to be indicated and detectable as a still image. In response to a process result of an RFID tag, a light pattern or colour of light may be varied. This enables to detect failed RFID tags among the passed RFID tags visually. Such instant visual feedback enables indication and detection of failed/passed RFID tags using a simple camera, or even by an operator.

Placement of moving RFID tags may be indicated. For example, placement of the line of the moving RFID tags in relation to the sensing aperture may be detected in a direction transverse of the movement of the RFID tags. In addition or alternatively, placement of each RFID tag in direction of the movement of the RFID tags passing the sensing aperture may be detected. Placement of RFID tags in direction of the movement has effect on coupling of the RFID tags with the coupling device, and/or performing the processing. Preferably, each of the RFID tags are processed inline. A detected still image of each RFID tag enables following up placement of successive RFID tags in relation to the sensing aperture. An RFID tag is arranged to be illuminated by a flash of light at the same time with a start of its processing. This enables to follow up the start time (or place in view of the sensing aperture) of processing for each RFID tag inline. The indicated start time of processing may be adjusted based on the indicated position of the illuminated RFID tag in relation to the sensing aperture.

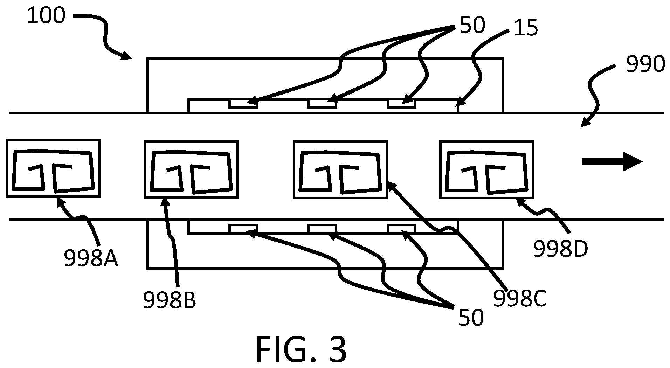

FIGURE 3 illustrates RFID tags on a coupling device. The coupling device 100 comprises lights 50. A support 990 comprising RFID tags 998A, 998B, 998C, 998D is arranged to pass over a sensing aperture 15 of the coupling device 100. The RFID tags 998A, 998B, 998C, 998D pass the sensing aperture 15 one after another, continuously. Each of the RFID tags 998A, 998B, 998C, 998D is to be processed during the time it is on a coupling area formed by the sensing aperture 15. The arrow shows direction of movement of the RFID tags 998A, 998B, 998C, 998D. Speed of the support 990 is adjusted in relation to process time such that each RFID tag 998A, 998B, 998C, 998D can be timely processed during its movement over the sensing aperture 15. Speed of the support 990 is affected by type and size of the RFID tags, and size of the sensing aperture 15, for example. Flash of lights 50 is adjusted such that it enables to indicate a place of a moving RFID tag 998A, 998B, 998C, 998D on the sensing aperture 15. Indicating a place of a moving RFID tag 998A, 998B, 998C, 998D enables to follow up placement of the RFID tag 998A, 998B, 998C, 998D in relation to the sensing aperture 15 at a start time of the process. This may enable to indicate and detect that the following processes will start to fail. For example, movement of the placement of RFID tags 998C, 998D started to be processed towards right end of the sensing aperture 15 (i.e. exiting it), shows development towards processes failing for the following RFID tags. A process may be controlled to start before an RFID tag is in the middle of the sensing aperture 15. A process may be controlled to start such that the mid-point of the process duration occurs in the middle of the sensing aperture. Start time of the process is adjusted by a controller in response to any indication that following process start to fail, or RFID tags are moving towards non-optimal placement for testing, or RFID tags are in non-optimal placement for processing.

An RFID tag has a leading edge and a trailing edge. The leading edge is a first part of the RFID tag that proceeds onto a sensing aperture, and the trailing edge is a last part of the RFID tag that proceeds onto the sensing aperture. A start signal of a process may be provided, for example by a trigger sensor. At least one light is activated upon receiving the start signal of the process. An offset, for example a clearance distance, may be applied in order to ensure that the RFID tag is within the sensing aperture. An offset may be preprogrammed as a distance of the RFID tag and/or time, which may be added after the start signal of the process has been provided. The offset is configured to match with the distance and/or time of the RFID tag to arrive onto the sensing aperture. This may be called a start position of the RFID tag. In response to the start signal of the process, or a corresponding start position of the RFID tag, at least one light is activated. The at least one light may be arranged to flash. The at least one light may include strobe(s). The lighted or strobed RFID tag may be indicated and/or detected to be within (area of) the sensing aperture. Position of the lighted or strobed RFID tag in relation to the sensing aperture may be indicated and/or detected. After the RFID tag, for example a leading edge, a trailing edge or a mid-point of the RFID tag, has passed the center of the sensing aperture, an end signal of the process may be received. Thereafter, the leading edge reaches an edge of the sensing aperture. The RFID tags enter within a sensing aperture and proceed along direction of movement of the RFID tags, before reaching an opposing side of the sensing aperture, where the RFID tags exit the sensing aperture. RFID tags are fed successively within the sensing aperture. An example of a test controlled to start such that the mid-point of the test duration occurs in the middle of the sensing aperture is illustrated in the following Table 1. The same applies for other processes for RFID tags, including powering-up, activating, identifying, encoding and/or reading data from RFID tags.

**Table 1. Exemplary timings, RFID tag roll speed one meter per second**

| ***Event*** | ***Time of the event (ms)*** |
|---|---|
| RFID tag trailing edge entered into sensing aperture | -12 |
| RFID tag is 2 mm clear of sensing aperture edge | -10 |
| Start signal of the test received, light is turned on | -9 |
| Light turned off | -8.8 |
| RFID tag at the center of sensing aperture (reference) | 0.0 |
| End signal of the test received | 9 |
| RFID tag leading edge has reached sensing aperture edge | 12 |

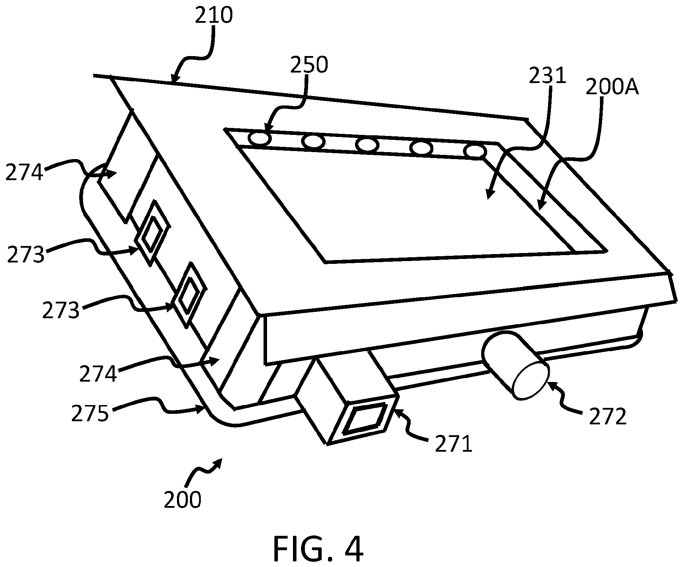

FIGURE 4 illustrates a coupling element. The coupling element 200 comprises a shield plate 210 and a sensing aperture 231 arranged on a top side of the coupling element 200, and a printed circuit board, PCB, 275, parallel with the top side. Corner elements 274 are arranged on corners of the coupling element 200 between the top side of and the PCB 275. The top side, PCB 275 and corner elements outline an interior of the coupling element 200A. Lights 250 are arranged in the interior of the coupling element 200A. The coupling element 200 comprises an input-output, IO, control port 271, which may be configured to a signal connection, and a coaxial connection 272, which may be a coaxial radiofrequency connection, which enables to form connections to external devices. The coupling element 200 comprises switches 273 for operation mode selection. Corner elements 274 may be arranged on four corners of a rectangular coupling element 200 between the shield plate 210 and printed circuit board, PCB, 275, which may be a printed wiring board, PWB.

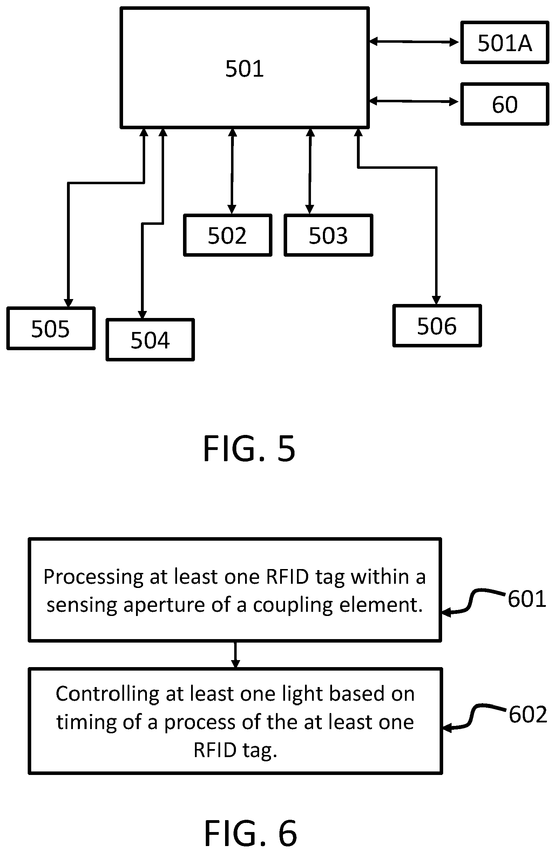

FIGURE 5 illustrates a system for processing RFID tags. The system comprises a controller 501. The controller may comprise a router and a connection for Ethernet connection, one or more switches for operating mode selection, and connections for input/output, 10 for sensors and stations. The controller 501 may be connected to an operator device 501A, for example via Ethernet connection. The controller 501 may be connected via a switch to a trigger sensor 504, to a rotary encoder 505 and to process stations 502, 503, like test stations, encoding stations. The rotary encoder 505 may be an electromechanical device, which may be configured to convert an angular position or motion of a shaft or axle to analog or digital output signals. The rotary encoder 505 may be configured to control speed and direction of multiple axes of motion. The controller 501 comprises a two-way data connection to the process stations 502, 503. Amount of the process stations 502, 503 may be 1-5, for example. One process station 502, 503 per lane may be adequate. More than one process stations 502, 503 may be used, for example, when the same coupling system is used for processing high-frequency, HF, RFID tags and ultra-high-frequency, UHF, RFID tags. Multiple process stations 502, 503 may be used, in case more data is to be gathered without slowing down the speed of movement of the RFID tags on lane. For example, an additional process station 506 may be a test station used for marking failed/bad RFID tags, as indicated/detected via at least one of the process stations 502, 503 being test stations. One or more process stations 502, 503 may be test stations, encoding stations, activating stations, identifying stations, power-up stations, reading stations, or a like process stations for RFID tags.

System of FIGURE 5 comprises a camera 60, which may be used for capturing images or imaging RFID tags under the process and simultaneously illuminated. The system may include multiple cameras. A controller may detect position of at least one or more RFID tags from image data.

A controller may be part of or integrated to a coupling element, as described with FIGURES. 1A and 1B. In addition or alternatively, a coupling element may be connected to separate controller, as described with FIGURE 5. A controller is configured to detect position of a RFID tag or successive RFID tags in relation to a sensing aperture, for example from image data captured by a camera. A software or executable instructions may be used for indicating and/or detecting RFID tag(s) position(s) based on image data. Different kind of coupling elements are applicable for the purposes described in this application.

Adjusting the starting point of a processing, i.e. a correct relative position of the sensing aperture and an RFID tag proceeding along a lane, may be difficult, because the coupling may depend on the speed of the RFID tag as well as the type of coupling being formed between the coupling element and the RFID tags, which in turn depends on the operation being done, the size and pitch of the RFID tag, etc. In this disclosure a method for indicating, and optionally adjusting, the point of connection of each RFID tag of a roll of RFID tags proceeding along the lane is provided.

Fig. 6 illustrates an example method in accordance with at least some embodiments of the present invention. The method for connecting a coupling element to at least one radio frequency identification, RFID, tag comprises processing, at phase 601, the at least one RFID tag within a sensing aperture of the coupling element such that the at least one RFID tag is coupled to the coupling element via an electromagnetic field; and controlling, at phase 602, the at least one light based on timing of a processing of the at least one RFID tag. The coupling element may comprise a housing comprising an inside; a shield plate forming a top surface of the housing and comprising at least one sensing aperture; a plate arranged inside of the housing, beneath the sensing aperture, and comprising means for generating an electromagnetic field arranged to couple with the at least one RFID tag; and at least one light arranged inside of the housing and arranged to illuminate the inside of the housing,

A method may comprise at least some or all of the following:
- moving, by at least one motor, an RFID tag within a sensing aperture (15) of a coupling element (100),
- connecting, by an electromagnetic field of the coupling element, to the RFID tag,
- at a start time of a process, like test/encode, receiving a start signal of the process and controlling at least one light (50) arranged near the sensing aperture (15) such that the RFID tag is illuminated during a short movement (of the RFID tag), preferably under 0.5 mm, in the direction of the movement of the RFID tags within the sensing aperture (15) and indicating the position of the RFID tags visually, for example by an operator, by a system, with aid of a software, and/or by a camera. A predefined time period for flashing a light may be, for example 200 microseconds.
- Repeating the above RFID tag position indication/detection using light (50) when an end signal of the process is received.
- Verifying that the RFID tag has been within the sensing aperture at the moments of the start signal of the process (with possible offset added), and of the end signal of the process.
- If a center position of the RFID tag in relation to the sensing aperture has been indicated/detected to be before a center point of the sensing aperture, an offset for delaying the trigger (after the start signal of the process) may be increased for the subsequent processes. In the opposite case, where the center position of the RFID tag in relation to the sensing aperture has been indicated/detected to pass the center point of the sensing aperture, the offset for delaying the trigger may be reduced. If both the start position of the RFID tag processing and the end position of the RFID tag processing fail to fit correctly in the sensing aperture, correspondingly, speed of the RFID tags is too high for the processes. In this case, either speed or number of processes may be reduced.

The above method is beneficial as an indication is provided by the light as to when the RFID tag is correctly within the sensing aperture. In this context, "correct" may be defined, for example, as a situation where the RFID tag may be coupled to the coupling element and where the coupling element is able to perform selected processes within the period that the RFID tag is present in the sensing aperture.

The method may further comprise: responsive to the light (50) being turned on, capturing image data, or at least one image, comprising the illuminated RFID tag and indicating/detecting, by a controller, the position of the RFID tag relative to the sensing aperture (15). The controller may be configured to detect the position of the illuminated RFID tag based on image data.

The method may further comprise: adjusting, by the controller, a start time of processing. The start time of processing is adjusted preferably so that the next RFID tag is correctly positioned within the sensing aperture at the start (time) of the process. In addition, placement of the RFID tags and/or roll of the RFID tags may be followed up and controlled. This provides an accurate alignment for the process based on actual RFID tag performance as measured from the coupling element, for example based on machine vision (photogrammetry from obtained image).

The method may further comprise: sending a signal for adjusting, by the controller, the speed of the motor, preferably so that movement of the RFID tags within the sensing aperture enables processing the RFID tags. The speed of the motor, which is arranged to move the RFID tags, is preferably maintained close to production speed, but limited to a speed, which is not too fast for processing.

The method may further comprise responsive to the coupling element (100) receiving an end signal of the process, turning on a light (50), optionally arranged near the sensing aperture (15), for the predefined time period. This allows measuring and adjusting based on the exit as well as the entry of the RFID tag within the sensing aperture. To be clear adjustment is possible based on a) the entry (process start), b) the exit (process end), singly or jointly. In an embodiment the motor speed is adjusted to enable processing, of the RFID tags. Alternatively or in addition, the light may be turned on, or flashed, responsive to the coupling element receiving a predetermined signal pattern and/or instructions.

A coupling element may receive signal pattern and/or instruction, which may trigger flashing or turning on the light. The received signal pattern and/or instruction may include at least one of the following: a particular command of an RFID air-interface protocol; a particular tag response of the RFID air-interface protocol; a particular part of a command, such as a pulse, train of pulses, pilot tone or preamble part of a command; a detected threshold level of RF carrier power; or a detected RF carrier frequency.

In at least some embodiments, RFID tags pass continuously over the coupling element. The RFID tags may be arranged on a continuous support, for example an inlay, a tape or a roll, which is moved over the coupling element.

In at least some embodiments, the RFID tag moves about 1 cm during the process.

In at least some embodiments, the tape (roll) speed may be about 2 m/s. The roll/tape is typically moved in a continuous manner. Successive RFID tags on a roll/tape are arranged to pass the sensing aperture of the coupling element successively, inline.

Generally, the RFID tag within the sensing aperture may be coupled to around 50% of the total time reciprocal to the RFID tag feed frequency (before a new RFID tag enters the sensing aperture). Thus, optimizing timing, like start time, or time of starting the process, is a problem which the present disclosure aims to solve. Size of the RFID tags, size of the sensing aperture and duration of the process are known. By flashing lights at the start time of the process, placement of the tested RFID tag in relation to the sensing aperture is indicated, and thus, perceivable and/or detectable. It is possible to do the same at the end time of the process. In alternative, one of the start and end times may be calculated. The coupling element and/or the process arrangement may comprise a switch for selecting whether the start time of the process, the end time of the process, or both are to be illuminated. Preferably, the duration of the illumination period is short in relation to the speed of movement of the RFID tags. This enables the illuminated RFID tags to appear stationary. In other words, the illuminated RFID tags are indicated and detectable as stationary. A position of a stationary appearing RFID tag at the time of the illumination is perceivable or detectable, for example by an operator or by using a simple camera system. When the multiple stationary images as indicated appear successively in the same location, one single stable image is perceived. In case the RFID tags fail to appear in a single stable image, but instead jitter is perceived, it is an indication that triggering the process is not reliable. In case the position and image of the successive RFID tag appears stable, it is an indication that trigger sensoring and settings of such are in order. In case RFID tags fail the processes and do not produce a stable image and jitter is perceived among the processed RFID tags, this may indicate problems in triggering, sensoring or settings of the process, and not necessarily problems in the RFID tags.

In some embodiments, several coupling elements are part of the line system. In "multilane" embodiments, each lane has its own coupling element or a single multilane coupling element is configured to handle multiple lanes. In addition, in embodiments a single lane may have several coupling elements, for example one for encoding and one for processing, arranged one after another.

With respect to the controllers discussed herein, for example the controller of a coupling element, one type of controller may comprise, for example, at least one computing device such a server, node or cloud computing device. Comprised in the computing device is a processor, which may comprise, for example, a single- or multi-core processor wherein a single-core processor comprises one processing core and a multi-core processor comprises more than one processing core. The processor may comprise more than one processor. A processing core may comprise, for example, a Cortex-A8 processing core by ARM Holdings or a Steamroller processing core produced by Advanced Micro Devices Corporation. The processor may comprise at least one Qualcomm Snapdragon and/or Intel Core processor, for example. The processor may comprise at least one application-specific integrated circuit, ASIC. The processor may comprise at least one field-programmable gate array, FPGA. The processor may be a means for performing method steps in the computing device. The processor may be configured, at least in part by computer instructions, to perform actions.

In the context of the present disclosure, it is understood that a controller for an apparatus may comprise several devices in cooperation. The devices may interface via a network used to facilitate communication to and from control apparatuses, radiation devices, measurement devices, meters, motors, gantries and other elements. Usable network technologies comprise: wireless local area network, WLAN, Ethernet, universal serial bus, USB, and/or worldwide interoperability for microwave access, WiMAX, standards, and satellite communication methods, direct wiring such as electrical wires, for example. Alternatively or additionally, a proprietary communication framework may be utilized. In some embodiments, separate networks may be used for one or more of the following purposes: communication between control apparatuses, communication between control apparatuses and devices, communication between controllers and servers, et cetera.

In some embodiments, a programmable logic controller, PLC, may be used as a controller. The standard IEC 61131 defines programmable logic controllers, however, in the present disclosure the term PLC is not limited to the standard. The PLC may be connected to the devices by a variety of means, including but not limited to electrical wires.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in RFID tag processing, like testing and encoding.

### REFERENCE SIGNS LIST

| | |
|---|---|
| 10, 210 | Shield plate |
| 15, 231 | Sensing aperture |
| 30 | Electrode plate |
| 31 | Electrode plate top surface |
| 32 | Electrode plate lower surface |
| 33 | Electrodes for creating coupling field |
| 50, 250 | Light(s) |
| 100, 200 | Coupling element |
| 100A, 200A | Interior of coupling element |
| 271 | Control port |
| 272 | Coaxial connection |
| 273 | Switches |
| 274 | Corner element |
| 275 | PCB |
| 501 | Controller |
| 501A | Operator device |
| 502 | Process station |
| 503 | Process station |
| 504 | Trigger sensor |
| 505 | Rotary encoder |
| 506 | Additional process station |
| 60 | Camera |
| 990 | RFID tag roll |
| 997 | RFID tag |
| 998A - 998D | RFID tags |
| 601, 602 | Method phases |

## Claims

1. A coupling element (100) configured to indicate a process position of at least one radio frequency identification, RFID, tag (997, 998A-D), the coupling element (100) comprising:
- a housing comprising an inside; and
- a shield plate (10) forming a top surface of the housing and comprising at least one sensing aperture (15);
- wherein the coupling element (100) is configured to generate an electromagnetic field arranged to couple with the at least one RFID tag (997, 998A-D); and the coupling element (100) is configured to process the at least one RFID tag (997, 998A-D) within the at least one sensing aperture (15) such that the at least one RFID tag (997, 998A-D) is coupled to the coupling element via the electromagnetic field;
**characterized in that**
- the coupling element (100) further comprises at least one light (50) arranged inside of the housing and configured to illuminate the inside of the housing; and
- the at least one light (50) is controlled based on timing of a process of the at least one RFID tag (997, 998A-D).

2. The coupling element of claim 1, wherein the at least one light (50) comprises at least one of the following: at least one light emitting diode, LED, an array of LEDs, a flash light or a strobe light.

3. The coupling element of any one of the preceding claims, wherein the at least one light (50) is arranged to illuminate the at least one RFID tag (997, 998A-D) within the sensing aperture (15).

4. The coupling element of any one of the preceding claims, wherein light emitted from the at least one light (50) is configured to reflect from the interior of the housing and the reflected light is configured to illuminate the at least one RFID tag (997, 998A-D) within the sensing aperture (15).

5. The coupling element of any of the preceding claims, wherein the at least one light (50) is controlled based on at least one of: a start signal of the process of the at least one RFID tag (997, 998A-D); an end signal of the process of the at least one RFID tag (997, 998A-D); a start position of the at least one RFID tag (997, 998A-D); and a predetermined signal pattern or instruction.

6. The coupling element of any one of the preceding claims, wherein the at least one light (50) comprises colored lights configured to indicate status of RFID tags responsive to different measurement and/or process results.

7. The coupling element of any one of the preceding claims, the coupling element configured to process RFID tags (997, 998A-D) successively fed on the sensing aperture (15), wherein the illuminated RFID tags (997. 998A-D) are indicated and/or detectable.

8. The coupling element of any one of the preceding claims, wherein the coupling element is configured to process successive RFID tags (997, 998A-D) and to illuminate the successive RFID tags (997, 998A-D) in order to indicate whether positions of the successive RFID tags (997, 998A-D) are stable or non-stable in relation to the sensing aperture (15).

9. The coupling element of any one of the preceding claims, wherein the coupling element is configured to adjust a speed of movement of an at least one RFID tag (997, 998A-D) to be processed in relation to the sensing aperture (15), based on an indicated position of the at least one processed RFID tag (997, 998A-D) in relation to the sensing aperture (15).

10. The coupling element of any one of the preceding claims, wherein the coupling element is configured to adjust a start time of the process, or a start position of at least one RFID tag to be processed, based on an indicated position of the at least one processed RFID tag in relation to the sensing aperture (15).

11. The coupling element of any one of the preceding claims, the at least one light (50) is caused to turn on for a predefined time period, responsive to at least one of the following:
- responsive to the coupling element (100) receiving a start signal of the process;
- responsive to the coupling element (100) receiving an end signal of the process;
- responsive to the coupling element (100) receiving a predetermined signal pattern or instruction.

12. The coupling element of any one of the preceding claims, wherein the at least one light (50) is controlled by adjusting a duration of illumination in relation to a speed of movement of the at least one RFID tag (997, 998A-D).

13. The coupling element of any one of the preceding claims, wherein the coupling element is configured to be controlled by a controller.

14. An apparatus for indicating a process position for at least one radio frequency identification, RFID, tag comprising the coupling element of any one of the preceding claims 1-13.

15. The apparatus of claim 14, further comprising a camera (60) configured to capture image data comprising at least one or successive illuminated RFID tags within the sensing aperture (15).

16. The apparatus of any of claims 14-15, further comprising a controller integrated to the coupling element, or a controller connected to the coupling element.

17. The apparatus of claim 16, wherein the controller is configured to indicate and/or detect at least one of the following:
- a position of the at least one or successive illuminated RFID tags (997, 998A-D) in relation to the sensing aperture (15), and
- stability or non-stability of a position of the successive illuminated RFID tags (997, 998A-D) in relation to the sensing aperture (15),
optionally based on the image data of claim 15.

18. The apparatus of any of claims 16-17, wherein the controller is configured to control the at least one light (50); wherein
optionally the controller is configured to turn on the light (50) for a predetermined time period responsive to at least one of the following:
- responsive to a start signal of the process received by the coupling element (100);
- responsive to an end signal of the process received by the coupling element (100); and
- responsive to a predetermined signal pattern or instruction.

19. The apparatus of any of claims 14-18, comprising a controller configured to send a control signal configured to adjust the speed of the at least one RFID tag, or successive RFID tags, based on the indicated and/or detected position or non-stable position of the illuminated RFID tags in relation to the sensing aperture (15).

20. A method for indicating a process position for at least one radio frequency identification, RFID, tag (997, 998A-D), the method comprising:
- processing (601) at least one RFID tag within a sensing aperture (15), which is situated on a top surface of a coupling element as defined of any of claims 1-13, such that the at least one RFID tag is coupled to the coupling element via an electromagnetic field, and
- controlling (602) at least one light, which is arranged inside of the housing of the coupling element, based on timing of a process of the at least one RFID tag.

21. A computer program configured to be performed by a processor, to cause the apparatus according to any of claims 14-19 to perform a method in accordance with claim 20.

## Patentansprüche

1. Kopplungselement (100), das so konfiguriert ist, dass es eine Prozessposition mindestens eines Radiofrequenz-Identifikations-, RFID-, Tags (997, 998A-D) anzeigt, wobei das Kopplungselement (100) Folgendes umfasst:
- ein Gehäuse, das einen Innenraum umfasst; und
- eine Abschirmplatte (10), die eine Oberseite des Gehäuses bildet und mindestens eine Sensoröffnung (15) umfasst;
- wobei das Kopplungselement (100) so konfiguriert ist, dass es ein elektromagnetisches Feld erzeugt, das sich mit dem mindestens einen RFID-Tag (997, 998A-D) koppelt; und das Kopplungselement (100) so konfiguriert ist, dass es das mindestens eine RFID-Tag (997, 998A-D) innerhalb der mindestens einen Sensoröffnung (15) verarbeitet, sodass das mindestens eine RFID-Tag (997, 998A-D) über das elektromagnetische Feld mit dem Kopplungselement gekoppelt wird;
**dadurch gekennzeichnet, dass**
- das Kopplungselement (100) weiter mindestens eine Leuchte (50) umfasst, die im Inneren des Gehäuses angeordnet und so konfiguriert ist, dass sie das Innere des Gehäuses beleuchtet; und
- die mindestens eine Leuchte (50) auf der Grundlage des Zeitablaufs eines Prozesses des mindestens einen RFID-Tags (997, 998A-D) gesteuert wird.

2. Kopplungselement nach Anspruch 1, wobei die mindestens eine Leuchte (50) mindestens eines von Folgendem umfasst: mindestens eine Leuchtdiode, LED, eine Anordnung von LEDs, eine Blitzleuchte oder ein Stroboskoplicht.

3. Kopplungselement nach einem der vorstehenden Ansprüche, wobei die mindestens eine Leuchte (50) so angeordnet ist, dass sie das mindestens eine RFID-Tag (997, 998A-D) innerhalb der Sensoröffnung (15) beleuchtet.

4. Kopplungselement nach einem der vorstehenden Ansprüche, wobei das von der mindestens einen Leuchte (50) emittierte Licht so konfiguriert ist, dass es von der Innenseite des Gehäuses reflektiert wird und das reflektierte Licht so konfiguriert ist, dass es den mindestens einen RFID-Tag (997, 998A-D) innerhalb der Sensoröffnung (15) beleuchtet.

5. Kopplungselement nach einem der vorstehenden Ansprüche, wobei die mindestens eine Leuchte (50) auf der Grundlage mindestens einem gesteuert wird von: einem Startsignal des Prozesses des mindestens einen RFID-Tags (997, 998A-D); einem Endsignal des Prozesses des mindestens einen RFID-Tags (997, 998A-D); einer Startposition des mindestens einen RFID-Tags (997, 998A-D); und einem vorbestimmten Signalmuster oder einer vorbestimmten Anweisung.

6. Kopplungselement nach einem der vorstehenden Ansprüche, wobei die mindestens eine Leuchte (50) farbige Leuchten umfasst, die so konfiguriert sind, dass sie den Status von RFID-Tags anzeigen, die auf unterschiedliche Messungen und/oder Prozessergebnisse reagieren.

7. Kopplungselement nach einem der vorstehenden Ansprüche, das Kopplungselement ist konfiguriert zur Verarbeitung von RFID-Tags (997, 998A-D), die nacheinander auf die Sensoröffnung (15) geführt werden, wobei die beleuchteten RFID-Tags (997, 998A-D) angezeigt und/oder nachweisbar sind.

8. Kopplungselement nach einem der vorstehenden Ansprüche, wobei das Kopplungselement so konfiguriert ist, dass es aufeinanderfolgende RFID-Tags (997, 998A-D) verarbeitet und die aufeinanderfolgende RFID-Tags beleuchtet, um anzuzeigen, ob Positionen der aufeinanderfolgenden RFID-Tags (997, 998A-D) in Bezug auf die Sensoröffnung (15) stabil oder instabil sind.

9. Kopplungselement nach einem der vorstehenden Ansprüche, wobei das Kopplungselement so konfiguriert ist, dass es eine Bewegungsgeschwindigkeit eines mindestens einen zu verarbeitenden RFID-Tags (997, 998A-D) in Bezug auf die Sensoröffnung (15) auf der Grundlage einer angezeigten Position des mindestens einen verarbeitenden RFID-Tags (997, 998A-D) in Bezug auf die Sensoröffnung (15) anpasst.

10. Kopplungselement nach einem der vorstehenden Ansprüche, wobei das Kopplungselement so konfiguriert ist, dass es eine Startzeit des Prozesses oder eine Startposition mindestens eines zu verarbeitenden RFID-Tags auf der Grundlage einer angezeigten Position des mindestens einen verarbeiteten RFID-Tags in Bezug auf die Sensoröffnung (15) anpasst.

11. Kopplungselement nach einem der vorstehenden Ansprüche, wobei die mindestens eine Leuchte (50) als Reaktion auf mindestens eines von Folgendem für einen vordefinierten Zeitraum eingeschaltet wird:
- als Reaktion auf das Kopplungselement (100), das ein Startsignal des Prozesses empfängt;
- als Reaktion auf das Kopplungselement (100), das ein Endsignal des Prozesses empfängt;
- als Reaktion auf das Kopplungselement (100), das ein vorbestimmtes Signalmuster oder eine vorbestimmte Anweisung empfängt.

12. Kopplungselement nach einem der vorstehenden Ansprüche, wobei die mindestens eine Leuchte (50) durch Anpassen einer Beleuchtungsdauer in Bezug auf eine Bewegungsgeschwindigkeit des mindestens einen RFID-Tags (997, 998A-D) gesteuert wird.

13. Kopplungselement nach einem der vorstehenden Ansprüche, wobei das Kopplungselement so konfiguriert ist, dass es von einer Steuereinheit gesteuert werden kann.

14. Einrichtung zur Anzeige einer Prozessposition für mindestens ein Radiofrequenz-Identifikations-, RFID-, Tag, das das Kopplungselement nach einem der vorstehenden Ansprüche 1-13 umfasst.

15. Einrichtung nach Anspruch 14, weiter umfassend eine Kamera (60), die so konfiguriert ist, dass sie Bilddaten aufnimmt, die mindestens einen oder mehrere nacheinander beleuchtete RFID-Tags innerhalb der Sensoröffnung (15) umfassen.

16. Einrichtung nach einem der Ansprüche 14-15, weiter umfassend eine in das Kopplungselement integrierte Steuereinheit oder eine mit dem Kopplungselement verbundene Steuereinheit.

17. Einrichtung nach Anspruch 16, wobei die Steuereinheit so konfiguriert ist, dass sie mindestens einer von Folgendem anzeigt und/oder nachweist:
- eine Position des mindestens einen oder mehrerer aufeinanderfolgender beleuchteter RFID-Tags (997, 998A-D) in Bezug auf die Sensoröffnung (15), und
- die Stabilität oder Nicht-Stabilität einer Position der aufeinanderfolgenden beleuchteten RFID-Tags (997, 998A-D) in Bezug auf die Sensoröffnung (15), optional basierend auf den Bilddaten nach Anspruch 15.

18. Einrichtung nach einem der Ansprüche 16-17, wobei die Steuereinheit so konfiguriert ist, dass sie die mindestens eine Leuchte (50) steuert; wobei
optional die Steuereinheit so konfiguriert ist, dass sie die Leuchte (50) für einen vorbestimmten Zeitraum einschaltet, und zwar als Reaktion auf mindestens eines von Folgendem:
- als Reaktion auf ein Startsignal des Prozesses, das vom Kopplungselement (100) empfangen wird;
- als Reaktion auf ein Endsignal des Prozesses, das vom Kopplungselement (100) empfangen wird; und
- als Reaktion auf ein vorbestimmtes Signalmuster oder eine vorbestimmte Anweisung.

19. Einrichtung nach einem der Ansprüche 14-18, umfassend eine Steuereinheit, die so konfiguriert ist, dass sie ein Steuersignal sendet, das so konfiguriert ist, dass es die Geschwindigkeit des mindestens einen RFID-Tags oder aufeinanderfolgender RFID-Tags basierend auf der angezeigten und/oder nachgewiesenen Position oder der nicht-stabilen Position der beleuchteten RFID-Tags in Bezug auf die Sensoröffnung (15) anpasst.

20. Verfahren zur Anzeige einer Prozessposition für mindestens eines Radiofrequenz-Identifikations-, RFID-, Tags (997, 998A-D), wobei das Verfahren Folgendes umfasst:
- Verarbeiten (601) mindestens eines RFID-Tags innerhalb einer Sensoröffnung (15), die sich auf einer Oberseite eines Kopplungselements nach einem der Ansprüche 1-13 befindet, so dass der mindestens eine RFID-Tag über ein elektromagnetisches Feld mit dem Kopplungselement gekoppelt ist, und
- Steuern (602) mindestens einer Leuchte, die im Inneren des Gehäuses des Kopplungselements angeordnet ist, basierend auf dem Timing eines Prozesses des mindestens einen RFID-Tags.

21. Computerprogramm, das so konfiguriert ist, dass es von einem Prozessor ausgeführt wird, um die Einrichtung nach einem der Ansprüche 14-19 dazu zu veranlassen, ein Verfahren nach Anspruch 20 durchzuführen.

## Revendications

1. Élément de couplage (100) configuré pour indiquer une position de traitement de la ou des étiquettes d'identification par radiofréquence (RFID) (997, 998A-D), l'élément de couplage (100) comprenant :
- un boîtier comprenant un intérieur ; et
- une plaque de protection (10) formant une surface supérieure du boîtier et comprenant au moins une ouverture de détection (15) ;
- dans lequel l'élément de couplage (100) est configuré pour générer un champ électromagnétique agencé à se coupler avec au moins une étiquette RFID (997, 998A-D) ; et l'élément de couplage (100) est configuré pour traiter la ou les étiquettes RFID (997, 998A-D) dans la ou les ouvertures de détection (15) de sorte que la ou les étiquettes RFID (997, 998A-D) soient couplées à l'élément de couplage via le champ électromagnétique ;
**caractérisé en ce que**
- l'élément de couplage (100) comprend en outre au moins une lampe (50) agencée à l'intérieur du boîtier et configurée pour éclairer l'intérieur du boîtier ; et
- la ou les lampes (50) sont commandées sur la base d'une temporisation d'un traitement de la ou des étiquettes RFID (997, 998A-D).

2. Élément de couplage selon la revendication 1, dans lequel la ou les lampes (50) comprennent au moins l'un parmi : au moins une diode électroluminescente, LED, un réseau de LED, une lampe torche ou une lampe stroboscopique.

3. Élément de couplage selon l'une quelconque des revendications précédentes, dans lequel la ou les lampes (50) sont agencées pour éclairer la ou les étiquettes RFID (997, 998A-D) dans l'ouverture de détection (15).

4. Élément de couplage selon l'une quelconque des revendications précédentes, dans lequel la lumière émise par la ou les lampes (50) est configurée pour se réfléchir à l'intérieur du boîtier et la lumière réfléchie est configurée pour éclairer la ou les étiquettes RFID (997, 998A-D) dans l'ouverture de détection (15).

5. Élément de couplage selon l'une quelconque des revendications précédentes, dans lequel la ou les lampes (50) sont commandées sur la base d'au moins l'un parmi : un signal de début du traitement de la ou des étiquettes RFID (997, 998A-D) ; un signal de fin du traitement de la ou des étiquettes RFID (997, 998A-D) ; une position de début de la ou des étiquettes RFID (997, 998A-D) ; et un motif de signal prédéterminé ou une instruction prédéterminée.

6. Élément de couplage selon l'une quelconque des revendications précédentes, dans lequel la ou les lampes (50) comprennent des lampes de couleur configurées pour indiquer un état d'étiquette RFID en réponse à différents résultats de mesure et/ou de traitement.

7. Élément de couplage selon l'une quelconque des revendications précédentes, l'élément de couplage étant configuré pour traiter des étiquettes RFID (997, 998A-D) introduites successivement dans l'ouverture de détection (15), dans lequel les étiquettes RFID (997, 998A-D) éclairées sont indiquées et/ou détectables.

8. Élément de couplage selon l'une quelconque des revendications précédentes, dans lequel l'élément de couplage est configuré pour traiter des étiquettes RFID (997, 998A-D) successives et pour éclairer les étiquettes RFID (997, 998A-D) successives afin d'indiquer si des positions des étiquettes RFID (997, 998A-D) successives sont stables ou non stables par rapport à l'ouverture de détection (15).

9. Élément de couplage selon l'une quelconque des revendications précédentes, dans lequel l'élément de couplage est configuré pour ajuster une vitesse de déplacement de la ou des étiquettes RFID (997, 998A-D) à traiter par rapport à l'ouverture de détection (15), sur la base d'une position indiquée de la ou des étiquettes RFID (997, 998A-D) traitées par rapport à l'ouverture de détection (15).

10. Élément de couplage selon l'une quelconque des revendications précédentes, dans lequel l'élément de couplage est configuré pour ajuster une heure de début du traitement, ou une position de début de la ou des étiquettes RFID à traiter, sur la base d'une position indiquée de la ou des étiquettes RFID traitées par rapport à l'ouverture de détection (15).

11. Élément de couplage selon l'une quelconque des revendications précédentes, dans lequel la ou les lampes (50) s'allument pendant une période de temps prédéfinie dans au moins l'un des cas suivants :
- en réponse au fait que l'élément de couplage (100) reçoit un signal de début du traitement ;
- en réponse au fait que l'élément de couplage (100) reçoit un signal de fin du traitement ;
- en réponse au fait que l'élément de couplage (100) reçoit un motif de signal prédéterminé ou une instruction prédéterminée.

12. Élément de couplage selon l'une quelconque des revendications précédentes, dans lequel la ou les lampes (50) sont commandées en ajustant une durée d'éclairage par rapport à une vitesse de déplacement de la ou des étiquettes RFID (997, 998A-D).

13. Élément de couplage selon l'une quelconque des revendications précédentes, dans lequel l'élément de couplage est configuré pour être commandé par un dispositif de commande.

14. Appareil pour indiquer une position de traitement pour au moins une étiquette d'identification par radiofréquence, RFID, comprenant l'élément de couplage selon l'une des revendications précédentes 1-13.

15. Appareil selon la revendication 14, comprenant en outre une caméra (60) configurée pour capturer des données d'image comprenant au moins une ou plusieurs étiquettes RFID éclairées successives dans l'ouverture de détection (15).

16. Appareil selon l'une quelconque des revendications 14-15, comprenant en outre un dispositif de commande intégré à l'élément de couplage, ou un dispositif de commande relié à l'élément de couplage.

17. Appareil selon la revendication 16, dans lequel le dispositif de commande est configuré pour indiquer et/ou détecter au moins une parmi :
- une position de la ou des étiquettes RFID (997, 998A-D) éclairées successives par rapport à l'ouverture de détection (15), et
- une stabilité ou une instabilité d'une position des étiquettes RFID (997, 998AD) éclairées successives par rapport à l'ouverture de détection (15), éventuellement sur la base des données d'image selon la revendication 15.

18. Appareil selon l'une quelconque des revendications 16-17, dans lequel le dispositif de commande est configuré pour commander la ou les lampes (50) ; dans lequel
le dispositif de commande peut être éventuellement configuré pour allumer la lampe (50) pendant une période prédéterminée en réponse à au moins un des cas suivants :
- en réponse à un signal de début du traitement reçu par l'élément de couplage (100) ;
- en réponse à un signal de fin du traitement reçu par l'élément de couplage (100) ; et
- en réponse à un motif de signal prédéterminé ou à une instruction prédéterminée.

19. Appareil selon l'une quelconque des revendications 14-18, comprenant un dispositif de commande configuré pour envoyer un signal de commande configuré pour ajuster la vitesse de la ou des étiquettes RFID, ou d'étiquettes RFID successives, sur la base de la position indiquée et/ou détectée ou de la position instable des étiquettes RFID éclairées par rapport à l'ouverture de détection (15).

20. Procédé d'indication d'une position de traitement pour au moins une étiquette d'identification par radiofréquence (RFID) (997, 998A-D), le procédé comprenant :
- le traitement (601) de la ou des étiquettes RFID dans une ouverture de détection (15), située sur une surface supérieure d'un élément de couplage selon l'une quelconque des revendications 1-13, de sorte que la ou des étiquettes RFID soient couplées à l'élément de couplage via un champ électromagnétique, et
- la commande (602) de la ou des lampes, qui sont agencées à l'intérieur du boîtier de l'élément de couplage, sur la base de la temporisation d'un traitement de la ou des étiquettes RFID.

21. Programme informatique configuré pour être réalisé par un processeur, pour amener l'appareil selon l'une quelconque des revendications 14-19 à réaliser un procédé selon la revendication 20.
